# FASCICULE DE BREVET EUROPEEN

(11) **EP 1 028 263 B1**
(45) Date de publication et mention de la délivrance du brevet: **04.06.2003**
(21) Numéro de dépôt: 00400343.0
(22) Date de dépôt: 08.02.2000
(51) Int. Cl.: F16D 3/68, F04D 29/04

(54) **Accouplement pour pompe et moteur a pompe**
Kupplung für Pumpe und Motor
Coupling for pump and pump motor

(30) Priorité: 09.02.1999 FR 9901491
(43) Date de publication de la demande: 16.08.2000
(73) Titulaire: Pompes Salmson, 92500 Rueil Malmaison (FR)
(72) Inventeur: Cordellier, Pascal, 53000 Laval (FR)
(74) Mandataire: Cabinet Hirsch

(56) Documents cités:
- EP-A- 0 278 630
- US-A- 3 884 049
- US-A- 4 073 606
- US-A- 4 540 382

## Description

La présente invention concerne le domaine des pompes, et plus précisément, concerne l'accouplement entre un moteur de pompe et une pompe.

Une pompe comprend généralement un corps de pompe, avec des orifices d'admission et de refoulement. Dans le corps de pompe est monté en rotation un arbre, sur lequel sont fixés des roues de pompe. La pompe peut être fixée sur un moteur d'entraînement, le plus souvent par son corps de pompe. Le moteur d'entraînement entraîne en rotation l'arbre de pompe, de sorte à faire fonctionner la pompe.

Un des problèmes pour les pompes est l'accouplement entre l'arbre de pompe et le moteur d'entraînement. L'accouplement est soumis à des contraintes multiples : il doit d'une part assurer l'entraînement en rotation de l'arbre de la pompe, i. e. transmettre la rotation de l'arbre du moteur à l'arbre de la pompe. Il doit en outre, le cas échéant, absorber les variations de la vitesse du moteur, notamment dans le cas de moteurs monophasés. Il absorbe avantageusement les vibrations de torsion entre la pompe et l'arbre du moteur. Un tel accouplement est avantageusement démontable facilement, de sorte à permettre le remplacement aisé de la pompe ou du moteur d'entraînement, ou plus généralement des interventions sur l'un ou l'autre de ces éléments.

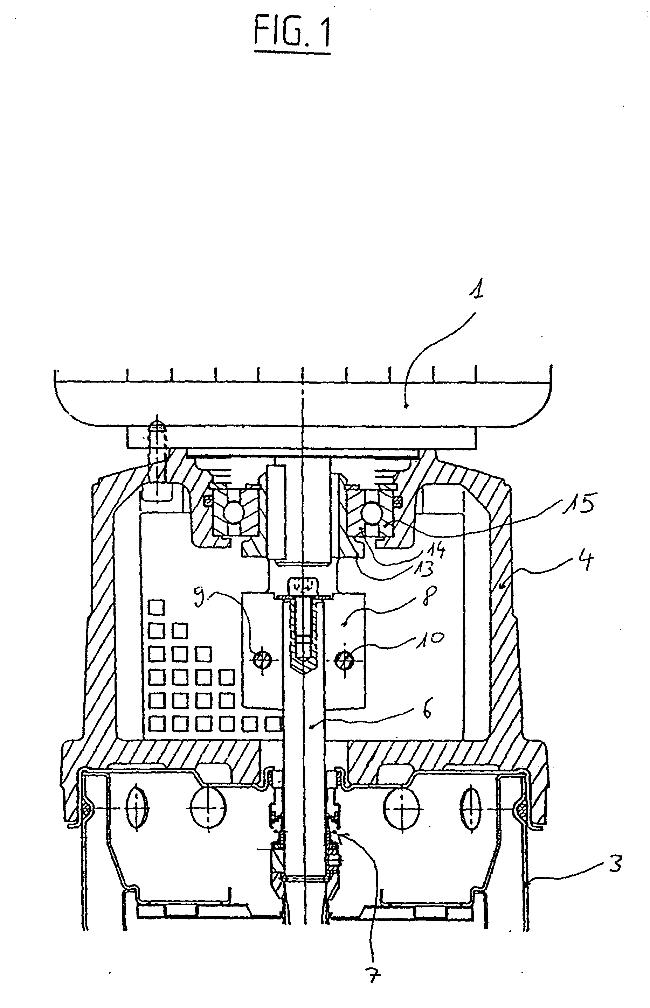

Il est en connu de prévoir dans le corps de pompe un palier pour absorber les efforts axiaux provoqués par l'hydraulique sur l'arbre de pompe, notamment dans le cas des pompes multi-étagées. La figure 1 montre un tel accouplement, qui est vendu sur les pompe portant la référence Multi V de la demanderesse.

On reconnaît sur la figure 1 la carcasse 1 et l'arbre 2 du moteur. Le corps de pompe 3 est fixé sur le moteur par l'intermédiaire d'une lanterne support moteur 4, qui est vissée sur la carcasse 1 par des vis 5. L'arbre 6 de la pompe fait saillie en dehors du corps de pompe, dans la lanterne. Une garniture mécanique 7 assure l'étanchéité de la pompe à la sortie de l'arbre du corps de pompe. Une pièce d'accouplement rigide 8 est fixée par pincement à l'une de ses extrémités sur l'arbre de pompe. On aperçoit sur la figure les vis 9 et 10 permettant de fixer la pièce 8 sur l'arbre de pompe 6. A son autre extrémité, la pièce 8 est maintenue en rotation par rapport à l'arbre 2 du moteur par une clavette 12.

Par ailleurs, la pièce 8 s'appuie axialement par une butée 13 sur la bague intérieure 14 d'un roulement; un circlips 16 maintient la bague du côté opposé à la butée. La bague extérieure 15 du roulement est montée dans la lanterne 4, et y est maintenu dans la direction axiale par une butée 17 et un circlips 18. Le roulement est par exemple un roulement à gorge profonde, qui d'une part assure le maintien radial de la pièce d'accouplement, et d'autre part, transmet à la lanterne 4 les efforts axiaux transmis par l'arbre de pompe.

Ce dispositif évite de faire subir aux paliers du moteur les contraintes axiales générées sur l'arbre de pompe par le fluide: les contraintes axiales sont transmises par le roulement 14 - 15 à la lanterne 4.

Ce dispositif connu présente les inconvénients suivants. D'une part, il ne permet pas d'absorber les variations de vitesse du moteur, notamment dans le cas de moteurs monophasés, dont la vitesse de rotation n'est pas uniforme. Ces variations de vitesse peuvent conduire à un matage de la clavette, ce qui nuit au bon entraînement de l'arbre de pompe. En outre, ce dispositif n'est pas capable d'absorber les défauts d'alignement axial entre l'arbre de pompe et l'arbre d'entraînement du moteur. Ces défauts peuvent provoquer des vibrations de l'arbre de pompe, et des fuites au niveau de la garniture mécanique. Enfin, ce dispositif ne permet pas un démontage aisé de l'arbre de pompe, car un tel démontage implique de démonter le palier, en enlevant les circlips, pour pouvoir ensuite enlever la pièce 8 intermédiaire pour accéder à l'arbre de pompe.

Il est connu par ailleurs de prévoir entre une pompe et un moteur de pompe un accouplement entièrement élastique, qui est fixé d'une part à l'arbre du moteur d'entraînement, et d'autre part à l'arbre de la pompe. Ce type de système est notamment utilisé pour les pompes montées sur socles, pour lesquelles l'alignement des arbres de moteur et de pompe est peu précis. Ce type d'accouplement est par exemple commercialisé sous les marques N-Eupex et Bipex, et comprend un manchon destiné à être monté sur l'arbre moteur, un manchon destiné à être monté sur l'arbre de pompe, par pincement ou à l'aide d'une clavette, et d'un bloc ou croisillon élastomère qui relie les deux manchons. Ce type d'accouplement permet d'absorber les défauts d'alignement et les variations de la vitesse de rotation du moteur. Il présente l'inconvénient de ne pas assurer le maintien axial ni radial de l'arbre de la pompe, et de nécessiter en conséquence de prévoir sur la pompe un palier et un roulement sur la pompe, au voisinage de la garniture mécanique assurant l'étanchéité du corps de pompe. Ceci rend le démontage de l'arbre de pompe difficile.

US-A-4 073 606 décrit une installation de pompage avec un moteur à la surface, qui entraîne une pompe axiale à travers un arbre relativement long. L'arbre est muni de paliers axiaux et radiaux susceptibles d'absorber les efforts tant radiaux qu'axiaux. L'extrémité supérieure de l'arbre est reliée à l'arbre de la pompe à travers une transmission à cannelures permettant d'absorber les dilatations axiales de l'arbre. Dans la transmission à cannelures est prévue une pièce en élastomère pour absorber les dilatations axiales. Un palier radial et axial distinct de la transmission maintient l'arbre à son extrémité supérieure, en dessous de la transmission à cannelures.

US-A-4 540 382 décrit un dispositif de couplage d'un arbre d'un moteur électrique à un piston d'une pompe. Sur l'arbre de la pompe est fixé une première pièce d'une transmission à cannelures; la deuxième pièce de la transmission à cannelure est montée à rotation dans un palier absorbant les efforts radiaux, et est entraînée en rotation par la première pièce par l'intermédiaire d'un élément résilient. La deuxième pièce présente à son extrémité un arbre d'entraînement excentré du piston. L'objectif dans cette demande est d'éviter la transmission des vibrations entre l'arbre de moteur et la deuxième pièce.

EP-A-0 278 630 décrit un système de réfrigération comprenant un compresseur présentant un arbre d'entré accouplé à un arbre de moteur. L'accouplement comprend une pièce sur l'arbre du compresseur et une pièce sur l'arbre de moteur, chacune présentant des saillies s'interpénétrant avec les saillies de l'autre, mais qui sont séparées par les dents d'une pièce compressible en chloroprene.

US-A-3 884 049 décrit un accouplement pour arbres comprenant d'une part une tête de couplage montée sur une douille à placer sur un arbre d'entraînement et d'autre part une tête de couplage montée sur une douille à placer sur un arbre entraîné. Les têtes de couplage présentent des saillies s'interpénétrant avec celles de l'autre pour transmettre le mouvement, les pattes d'une pièce compressible étant interposées entre les saillies des deux têtes de couplage.

L'invention a pour objet une solution au problème de l'accouplement des pompes et des moteurs. Elle fournit une solution qui permet un démontage simple, qui absorbe les variations de vitesse du moteur, et qui évite en outre de prévoir un palier supplémentaire dans la pompe. L'accouplement de l'invention assure le maintien radial et axial de l'arbre de pompe. Il permet en outre d'absorber les défauts d'alignement entre le moteur et la pompe.

Plus précisément, l'invention propose une pompe selon la revendication 1.

Dans un mode de réalisation, les moyens de montage comprennent une portée de roulement et une butée, la portée de roulement étant située du même côté de la butée que les moyens de fixation à l'extrémité de l'arbre de pompe.

L'invention propose avantageusement une pompe, présentant un corps de pompe avec une lanterne support moteur et un arbre de pompe, un palier monté dans la lanterne, et une telle pièce, fixée à l'extrémité de l'arbre de pompe et montée dans le palier.

L'invention propose aussi une pompe et moteur de pompe, selon la revendication 4.

Avantageusement, la pièce sur l'arbre de pompe est liée en translation axiale et en rotation avec l'arbre de pompe.

Dans un mode de réalisation, la pièce sur l'arbre de moteur est liée avec l'arbre de moteur en rotation uniquement.

L'invention propose avantageusement une pompe et un moteur de pompe reliés par un tel accouplement, la pompe présentant un corps de pompe avec une lanterne support moteur et un arbre de pompe, un palier monté dans la lanterne, le moteur de pompe présentant un arbre, la pièce présentant des moyens de fixation sur un arbre de pompe étant fixée à l'extrémité de l'arbre de pompe et montée dans le palier, et la pièce présentant des moyens de fixation sur un arbre de moteur étant fixée sur l'arbre moteur.

D'autres caractéristiques et avantages de l'invention apparaîtront à la lecture de la description qui suit de modes de réalisation de l'invention, donnée à titre d'exemple et en référence aux dessins annexés, qui montrent
- figure 1, une représentation d'une pompe de l'art antérieur;
- figure 2, une représentation schématique en coupe d'un accouplement de pompe selon l'invention;
- figure 3, une représentation schématique en perspective éclatée d'un accouplement de pompe selon l'invention.

L'invention propose d'utiliser pour l'accouplement d'un arbre de pompe et d'un moteur de pompe une pièce d'accouplement, montée en bout de l'arbre de pompe, qui d'une part supporte un roulement ou palier assurant le guidage axial et radial de l'arbre de pompe, et d'autre part peut recevoir des moyens d'entraînement élastique de l'arbre de pompe. On entend par accouplement élastique tout accouplement qui transmet à l'arbre de pompe l'entraînement de l'arbre du moteur, et qui amortit les variations de la vitesse instantanée de rotation de l'arbre du moteur ou les défauts d'alignement des arbres.

L'invention propose en fait de regrouper sur une seule pièce les fonctions de guidage axial et radial et d'entraînement élastique. Cette pièce est munie de moyens d'accouplement pour le montage direct sur l'arbre de pompe. US-A-4 073 606 montre sur l'arbre une fonction d'entraînement et une fonction de guidage axial et radial, qui sont réalisées par des pièces distinctes. US-A-4 540 382 ne montre pas le couplage sur un arbre de pompe; par ailleurs, il n'y a pas de guidage axial dans ce document, du fait de l'absence d'efforts axiaux.

L'invention concerne aussi un accouplement comprenant une telle pièce, et une pompe présentant une telle pièce ou un tel accouplement.

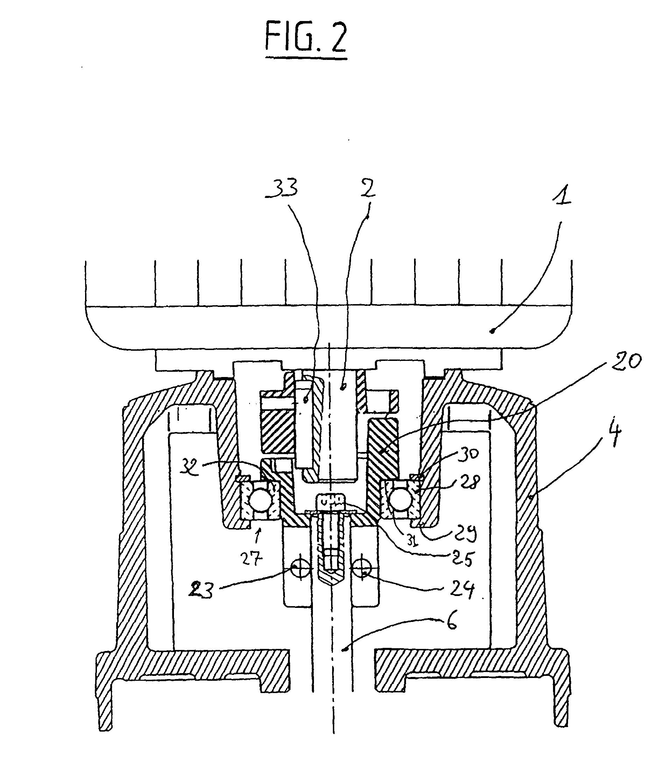

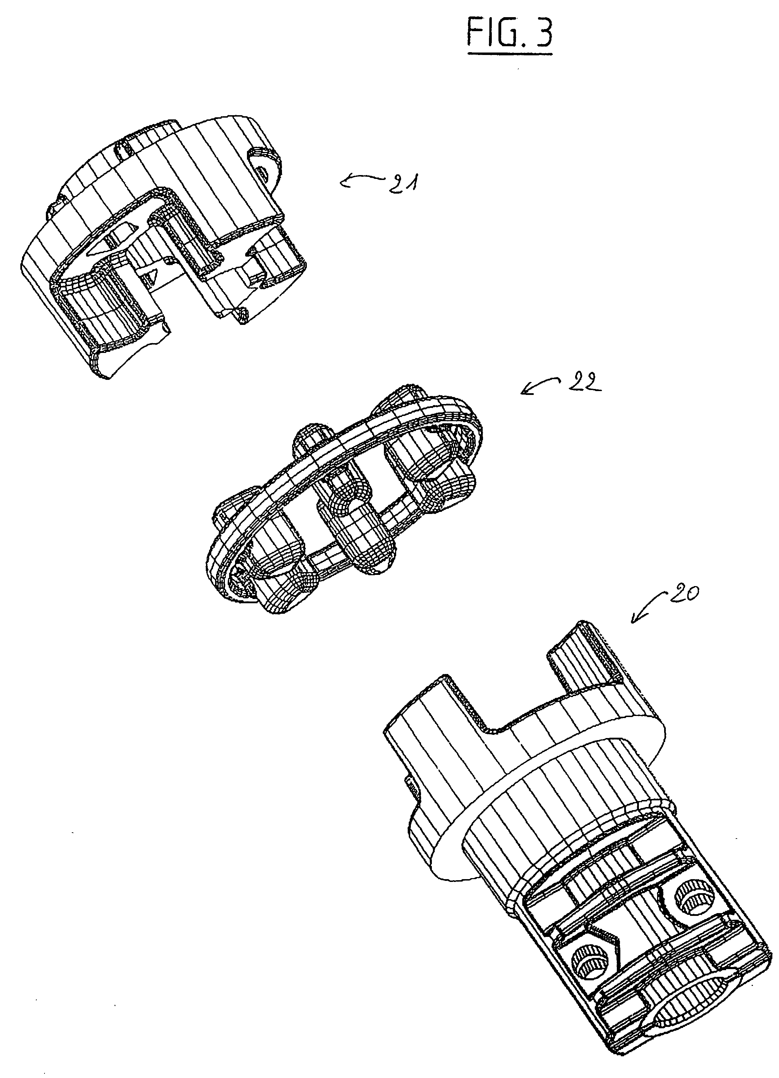

L'invention est décrite dans la suite en référence aux figures 2 et 3 qui montrent un mode de réalisation préféré de l'invention, dans lequel les moyens d'entraînement élastique sont formés de deux pièces coulissant l'une dans l'autre dans la direction axiale de l'accouplement, et sensiblement complémentaires dans le plan radial, entre lesquelles sont disposés des coussinets élastiques.

La figure 2 montre une représentation schématique en coupe d'un accouplement de pompe selon l'invention; on reconnaît sur la figure 2 les éléments déjà décrits en référence à la figure 1, et notamment la carcasse 1 et l'arbre 2 du moteur, la lanterne 4, qui relie la carcasse 1 et le corps de pompe, et l'arbre 6 de la pompe.

L'accouplement de l'invention est formé de deux pièces rigides 20 et 21, qualifiées aussi de demi-accouplements, qui coulissent l'une dans l'autre dans la direction axiale, et sont sensiblement complémentaires dans le plan radial. Entre ces deux pièces sont disposés des moyens d'amortissement 22, qui n'apparaissent pas sur 5 la figure 2. La structure précise des deux pièces et des moyens d'amortissement apparaît plus clairement de la vue en perspective éclatée de la figure 3 et sera expliquée plus en détail en référence à cette figure.

La pièce 20 est fixée sur l'arbre de pompe, tandis que la pièce 21 est fixée sur l'arbre de moteur.

Cette conception de l'accouplement permet d'assurer entre l'arbre de moteur et l'arbre de pompe une liaison supportant les jeux axiaux. On évite ainsi de transmettre aux paliers du moteurs les contraintes axiales induites sur l'arbre de pompe par le pompage du fluide. La présence des moyens d'amortissement assure l'absorption par l'accouplement des variations possibles de la vitesse de rotation du moteur, ou l'absorption des défauts d'alignement du moteur. Comme les deux pièces sont sensiblement complémentaires dans le plan radial, la rotation de la pièce 21 du fait de la rotation de l'arbre du moteur entraîne en rotation la pièce 20, et donc l'arbre de pompe.

En outre, comme le montre la figure, la pièce 20 de l'accouplement est fixée sur l'arbre de pompe par une liaison susceptible de transmettre les efforts axiaux à la lanterne. Dans le mode de réalisation de la figure, on a utilisé un montage de la pièce 20 sur l'arbre par pincement, à l'aide de deux vis 23 et 24; L'arbre présente en outre à son extrémité un trou taraudé, dans lequel est vissée un boulon ou une vis 25. Les vis 23 et 24 assurent le maintien de la pièce 20 sur l'extrémité de l'arbre. Le boulon 25 assure le positionnement de la pièce 20 sur l'arbre avant le serrage des vis 23 et 24.

La pièce 20 est aussi montée à rotation dans la lanterne 5, par un palier 27. Celui-ci est dans l'exemple de la figure formé d'un roulement à gorge profonde, susceptible d'assurer le maintien radial et aussi axial de la pièce 20. La bague extérieure 28 du roulement est montée sur la lanterne; dans le sens axial, elle s'appuie sur une butée 29 ménagée dans la lanterne, et est maintenue du côté du moteur par un circlips 30. La pièce 20 présente une butée 31 sur laquelle s'appuie la bague intérieure 32 du roulement. Le roulement est monté à force par sa bague intérieure sur la pièce 20, sur la portée de roulement usinée sur la pièce 20, en s'appuyant sur la butée 31. On pourrait aussi prévoir un montage à l'aide d'un circlips, comme dans le cas du dispositif de la figure 1. Dans la mesure où les efforts axiaux exercés par l'arbre de pompe sont essentiellement dirigés dans le sens qui rapproche l'extrémité de l'arbre du corps du corps de pompe - de haut en bas sur la figure 2 - un montage à force du roulement sur la pièce 20 suffit. Cette solution simplifie le montage.

L'ensemble assure le maintien radial de la pièce 20 par rapport à la lanterne, et aussi la transmission des efforts axiaux depuis l'arbre 20 vers la lanterne.

Comme le montre la figure, il est avantageux que la butée de la lanterne destinée à recevoir le palier 27 soit disposée de sorte que le palier soit disposé du côté de la lanterne opposé à la pompe. Il est avantageux aussi que la butée 31 de la pièce 20 soit disposée de sorte que la bague interne du roulement se trouve du même côté de la butée que l'arbre de pompe. Ceci assure la transmission des efforts axiaux de l'arbre de pompe sur la lanterne, par l'intermédiaire des butées, dans le sens dans lequel s'exercent principalement les contraintes sur l'arbre de pompe.

La pièce 21 de l'accouplement peut être montée sur l'arbre du moteur de diverses façons. Dans le mode de réalisation de la figure, on utilise une clavette 33 pour assurer la fixation radiale de la pièce 21 sur l'arbre. Le maintien en position axiale de ces deux éléments est assuré par un goupille ou par une vis radiale, dans le trou 34 représenté sur la figure 2.

Le montage de l'accouplement selon l'invention s'effectue de la façon suivante. On monte le palier sur la pièce 20, à force comme expliqué plus haut. Après avoir monté la lanterne sur le corps de pompe, on introduit ensuite la pièce 20 dans la lanterne, autour de l'arbre 6, et on l'y fixe à l'aide du boulon 25 et des vis 23 et 24. On peut ensuite disposer sur la pièce 20 les moyens d'amortissement 22, et fixer le palier dans la lanterne à l'aide du circlips 30. On monte alors sur la lanterne le moteur, sur l'arbre duquel on a préalablement fixé la pièce 21.

Le démontage s'effectue en sens inverse. On comprendra que l'invention permet un accès facile à la garniture mécanique de l'arbre de pompe, et permet une intervention simple sur la pompe.

La figure 3 montre une représentation schématique en perspective éclatée d'un accouplement de pompe selon l'invention. On reconnaît sur la figure 3 la pièce 20 destinée à être montée sur l'arbre de la pompe, la pièce 21 destinée à être montée sur l'arbre du moteur, et les moyens d'amortissement 22. Comme le montre la figure, dans le mode de réalisation, les pièces 20 et 21 présentent chacun trois parties en saillie, ayant sensiblement la forme d'un sixième de disque, et qui sont équiréparties. De la sorte, les parties en saillie de la pièce 20 sont susceptibles d'être introduites entre les parties en saillie de la pièce 21. Les pièces 20 et 21 sont par exemple réalisées en aluminium. Les moyens d'amortissement 22 sont formés de six coussinets élastiques, par exemple des coussinets en matériau élastomère du type polyuréthane; ils sont reliés entre eux par un anneau externe, et sont agencés de sorte à pouvoir s'intercaler entre les parties en saillie des pièces 20 et 21.

La présence des coussinets assure d'une part l'amortissement des variations de vitesse instantanée du moteur, et d'autre part permet d'absorber les défauts d'alignement entre l'arbre du moteur et l'arbre de pompe.

On aperçoit encore sur la figure 3 la portée de roulement destinées à recevoir la bague intérieure du roulement, qui est situé sur la partie extérieure de la pièce 20 et peut être usiné avec une grande précision.

De la sorte, dans l'accouplement de l'invention, la pièce 20 assure les trois fonctions de fixation sur l'extrémité de l'arbre de pompe, de guidage axial et radial de l'arbre de pompe, et d'entraînement élastique de cet arbre. A cet effet, la pièce présente d'une part des moyens de fixation en rotation et en translation sur l'extrémité de l'arbre, par pincement et vissage dans le mode de réalisation des figures 2 et 3.

Elle présente d'autre part des moyens de montage d'un palier, formés dans le mode de réalisation des figures de la portée de roulement et de la butée.

Elle présente enfin des moyens d'entraînement élastique en rotation, dans l'exemple du fait de la conformation de la pièce 20 qui est complémentaire de celle de la pièce 21.

Bien entendu, la présente invention n'est pas limitée aux exemples et modes de réalisation décrits et représentés, mais elle est susceptible de nombreuses variantes accessibles à l'homme de l'art. Ainsi, la forme précise des pièces 20 et 21 formant l'accouplement n'est pas limitée au mode de réalisation décrit et représenté aux figures. On peut prévoir d'autres formes qui assurent d'une part un jeu axial, et d'autre part un entraînement radial, et qui permette en outre d'absorber les défauts d'alignement et les variations de vitesse du moteur. Chacune des pièces peut présenter deux ou quatre parties en saillie, l'une des pièces peut présenter une forme de croix; etc.

En outre, les moyens d'entraînement ne sont pas limités au mode de réalisation qui est représenté et décrit plus haut de deux pièces complémentaires dans un plan radial. On peut pour l'invention utiliser tout type de moyens d'entraînement, et par exemple, des moyens d'entraînement formés d'élastomère et de lamelles métalliques ou encore des moyens d'entraînement complètement élastiques. On peut aussi utiliser des pièces mâles cannelées sur les pièces d'accouplement côté arbre moteur et côté arbre de pompe, qui sont entourées par une bague en matériau élastique présentant de part et d'autre un logement d'une complémentaire de chacune des pièces cannelées. D'autres moyens d'entraînement qui amortissent les vibrations et les variations de vitesse instantanée sont possibles.

On peut utiliser pour fixer le demi-accouplement sur l'arbre de pompe des moyens de fixation différents des moyens décrits plus haut - par exemple une fixation par vissage de la pièce et blocage par une goupille, ou tout autre solution connue en soi.

## Revendications

1. Une pompe, comprenant :
- un arbre de pompe (6) monté à rotation ;
- une pièce (20) fixée en translation et en rotation à l'extrémité de l'arbre de pompe (6) et présentant des moyens de montage d'un palier (27) et des moyens d'entraînement élastique en rotation; et
- un palier (27) pour le guidage axial et radial de la pièce (20), la pièce (20) étant montée dans le palier grâce aux moyens de montage.

2. La pompe selon la revendication 1, dans laquelle :
- le palier (27) est un roulement ; et
- les moyens de montage comprennent une portée de roulement et une butée (31), la portée de roulement étant située du même côté de la butée que les moyens de fixation à l'extrémité de l'arbre de pompe.

3. La pompe selon la revendication 1 ou 2, comprenant en outre un corps de pompe avec une lanterne support moteur (4) dans laquelle le palier (27) est monté dans la lanterne.

4. Une pompe et un moteur de pompe, avec :
- la pompe comprenant un arbre de pompe (6) monté à rotation, une pièce (20) liée sur l'arbre de pompe (6) et un palier (27) pour le guidage axial et radial de la pièce (20), la pièce (20) étant montée dans le palier ; et
- le moteur de pompe (1) présentant un arbre de moteur (2) et une pièce liée sur l'arbre de moteur ;
la pièce (20) liée sur l'arbre de pompe (6) et la pièce liée sur l'arbre de moteur étant couplées élastiquement en rotation.

5. Pompe et moteur de pompe de la revendication 4, avec la pièce sur l'arbre de pompe étant liée en translation axiale et en rotation avec l'arbre de pompe.

6. Pompe et moteur de pompe selon la revendication 4 ou 5, avec la pièce sur l'arbre de moteur étant liée avec l'arbre de moteur en rotation uniquement.

7. Pompe et moteur de pompe selon la revendication 4, 5 ou 6, avec la pièce (20) liée sur l'arbre de pompe (6) étant fixée à l'extrémité de l'arbre de pompe et la pièce liée sur l'arbre de moteur (2) étant fixée à l'extrémité de l'arbre de moteur.

8. Pompe et moteur de pompe selon la revendication 7, avec la pompe présentant un corps de pompe avec une lanterne support moteur (4), le palier (27) étant monté dans la lanterne.

9. Pompe et moteur de pompe selon l'une quelconque des revendications 4 à 8, avec :
- le palier (27) étant un roulement ; et
- la pièce (20) liée sur l'arbre de pompe (6) comprend une portée de roulement et une butée (31) pour le montage du roulement, la portée de roulement étant située du même côté de la butée que les moyens de fixation à l'extrémité de l'arbre de pompe.

## Patentansprüche

1. Pumpe, welche folgendes aufweist:
- eine Pumpenwelle (6), die drehbar angebracht ist;
- ein Teil (20), das verschieblich und drehbar am Ende der Pumpenwelle (6) befestigt ist und Mittel zur Anbringung eines Lagers (27) und von Antriebsmitteln für einen elastischen Drehantrieb aufweist; und
- ein Lager (27) zur Führung des Teils (20) in axialer und radialer Richtung, wobei das Teil (20) mittels Montagemitteln in dem Lager angebracht ist.

2. Pumpe nach Anspruch 1, bei welcher
- das Lager (27) ein Wälzlager ist; und
- die Montagemittel einen Lagerbereich und einen Anschlag (31) umfassen, wobei der Lagerbereich auf derselben Seite des Anschlags wie die Befestigungsmittel am Ende der Pumpenwelle liegt.

3. Pumpe nach Anspruch 1 oder 2, welche darüber hinaus ein Pumpenhauptteil mit einem Aufsatz zur Abstützung des Motors (4) aufweist, bei welcher das Lager (27) in dem Aufsatz angebracht ist.

4. Pumpe und Pumpenmotor mit:
- der Pumpe, welche eine Pumpenwelle (6) aufweist, die drehbar angebracht ist, ein gekoppeltes Teil (20), auf der Pumpenwelle (6) angebracht ist, und ein Lager (27) zum Führen des Teils (20) in axialer und radialer Richtung, wobei das Teil (20) in dem Lager montiert ist; und
- den Pumpenmotor (1), welche eine Motorwelle (2) und ein gekoppeltes Teil aufweist, das auf der Motorpumpe montiert ist;
wobei das gekoppelte Teil (20) auf der Pumpenwelle (6) und das gekoppelte Teil auf der Motorwelle elastisch zur Drehbewegung gekoppelt sind.

5. Pumpe und Pumpenmotor nach Anspruch 4, wobei das Teil auf der Pumpenwelle axial verschieblich und drehbar mit der Pumpenwelle verbunden ist.

6. Pumpe und Pumpenmotor nach Anspruch 4 oder 5, wobei das Teil auf der Motorwelle ausschließlich zur Drehung mit der Motorwelle verbunden ist.

7. Pumpe und Pumpenmotor nach Anspruch 4, 5 oder 6, wobei das gekoppelte Teil auf der Pumpenwelle (20) am Ende der Pumpenwelle und das gekoppelte Teil auf der Motorwelle (2) am Ende der Motorwelle befestigt ist.

8. Pumpe und Pumpenmotor nach Anspruch 7, wobei die Pumpe ein Pumpenhauptteil mit einem Aufsatz zur Abstützung des Motors (4) aufweist, wobei das Lager (27) in dem Aufsatz untergebracht ist.

9. Pumpe und Pumpenmotor nach einem der Ansprüche 4 bis 8, wobei:
- das Lager (27) ein Wälzlager ist; und
- das gekoppelte Teil (20) auf der Pumpenwelle (6) einen Lagerbereich und einen Anschlag (31) zur Montage des Wälzlagers aufweist, wobei der Lagerbereich auf derselben Seite des Anschlags wie die Befestigungsmittel am Ende der Pumpenwelle ausgebildet ist.

## Claims

1. A pump comprising:
- a rotatively mounted pump shaft (6);
- a part (20) integral as regards translatory and rotational movement at the end of said pump shaft (6) and having means for mounting a bearing (27) and resilient rotational drive means; and
- a bearing (27) for axial and radial guiding of said part (20), the part (20) being mounted in said bearing using said mounting means.

2. The pump according to claim 1, in which:
- the bearing (27) is a rolling bearing; and
- said mounting means comprise a rolling bearing surface and an abutment (31), said rolling bearing surface being located at the same side of said abutment as said securing means to the end of said pump shaft.

3. The pump according to claim 1 or 2, further comprising a pump body having a motor support member (4) in which said bearing (27) is mounted inside the motor support member.

4. A pump and a pump motor, with:
- the pump comprising a pump shaft (6) rotatively mounted, a part (20) securely fastened to said pump shaft (6) and a bearing (27) for axial and radial guiding of said part (20), said part (20) been mounted in said bearing; and
- said pump motor (1) having a motor shaft (2) and a part securely fastened to said motor shaft;
said part (20) securely fastened to said pump shaft (6) and said part securely fastened to said motor shaft being resiliently coupled in rotation.

5. The pump and pump motor of claim 4, in which said part on the pump shaft is integral in axial translation and rotation with said pump shaft.

6. The pump and pump motor according to claim 4 or 5, in which said part on the motor shaft is integral only in rotation with said motor shaft.

7. The pump and pump motor according to claim 4, 5 or 6, in which said part (20) securely fastened to said pump shaft (6) is secured to the end of the pump shaft with said part securely fastened to the motor shaft (2) being secured to the end of the motor shaft.

8. The pump and pump motor according to claim 7, in which the pump has a pump body with a motor support member (4), said bearing (27) being mounted inside said motor support member.

9. The pump and pump motor according to any one of claims 4 to 8, in which:
- the bearing (27) is a rolling bearing; and
- said part (20) securely fastened to the pump shaft (6) comprises a bearing surface for the rolling bearing and an abutment (31) for mounting the rolling bearing, the bearing surface for the rolling bearing being located at the same side of said abutment as the securing means provided at the end of said pump shaft.
